# EUROPÄISCHE PATENTANMELDUNG

(11) **EP 3 719 467 A1**
(43) Veröffentlichungstag der Anmeldung: **07.10.2020**
(21) Anmeldenummer: 20168160.8
(22) Anmeldetag: 06.04.2020
(51) Int. Cl.: G01K 7/42, G01K 17/00, G01N 25/20, G01N 25/48, G06F 30/13, G06F 111/20, G06F 119/08

(54) **COMPUTERIMPLEMENTIERTES VERFAHREN UND SYSTEM ZUM BERECHNEN VON BAUPHYSIKALISCHEN KENNWERTEN**

(30) Priorität: 04.04.2019 DE 102019108809
(71) Anmelder: technicsatelier GmbH, 70173 Stuttgart (DE)
(72) Erfinder: Ates, Emre, 70178 Stuttgart (DE); Akarcay, Atilla, 8047 Zürich (CH)
(74) Vertreter: K & H Bonapat Patentanwälte Koch · von Behren & Partner mbB

(57) **Zusammenfassung**

Die Erfindung betrifft ein computerimplementiertes Verfahren zum Berechnen von bauphysikalischen Kennwerten, insbesondere von Wärmestromkennwerten (W), einer konfigurierbaren Bauteilanordnung in einem Bauobjekt mit einem Berechnen der bauphysikalischen Kennwerte, insbesondere der Wärmestromkennwerte (W), des Zusammenbaus des zumindest einen Bauteils (10) und der Einbauumgebung (12) des zumindest einen Bauteils (10) unter Verwendung von individuellen bauphysikalischen Kennwerten des zumindest einen Bauteils (10) und individuellen bauphysikalischen Kennwerten der Einbauumgebung (12) des zumindest einen Bauteils (10) mittels eines Berechnungsmoduls (18).

## Beschreibung

### Stand der Technik

Die vorliegende Erfindung betrifft ein computerimplementiertes Verfahren zum Berechnen von bauphysikalischen Kennwerten, insbesondere von Wärmestromkennwerten, einer konfigurierbaren Bauteilanordnung in einem Bauobjekt.

Herkömmlicherweise erfolgt die Berechnung der bauphysikalischen Kennwerte durch einen Bauphysiker, der eine jeweils individuell konfigurierte Bauteilanordnung des Bauobjekts zeichnet oder bereits gezeichnete Details in seinem Programm unterlegt und die konfigurierte Anordnung anschließend unter Verwendung von entsprechenden Formeln und bauphysikalischen Randbedingungen sowie Angaben für den ausgewählten Fall von zu dem individuell berechnet.

Des Weiteren existieren beispielsweise Web-basierte Benutzerschnittstellen, welche unter Eingabe allgemeiner Parameter wie beispielsweise einer Wohnfläche und einem Baujahr des Objekts einen durchschnittlichen Energieverbrauch schätzen können. Solche Plattformen liefern jedoch nur sehr allgemeine Schätzwerte für bestimmte Energiekennwerte auf der Basis empirischer Werte. Somit besteht keine Eignung zur Verwendung solcher Systeme zur Berechnung spezifischer bauphysikalischer Kennwerte, insbesondere von Wärmestromkennwerten einer konfigurierten Bauteilanordnung in einem Bauobjekt.

Demzufolge besteht ein Bedarf, bestehende Verfahren und Systeme zum Berechnen von bauphysikalischen Kennwerten, insbesondere von Wärmestromkennwerten, einer konfigurierbaren Bauteilanordnung in einem Bauobjekt, zu verbessern.

### Offenbarung der Erfindung

Die vorliegende Erfindung betrifft ein computerimplementiertes Verfahren zum Berechnen von bauphysikalischen Kennwerten, insbesondere von Wärmestromkennwerten, einer konfigurierbaren Bauteilanordnung in einem Bauobjekt nach Patentanspruch 1. Die Erfindung betrifft des Weiteren ein System zum Berechnen von bauphysikalischen Kennwerten, insbesondere von Energiekennwerten, einer konfigurierbaren Bauteilanordnung in einem Bauobjekt nach Patentanspruch 15.

Weitere Ausführungsformen der vorliegenden Erfindung sind Gegenstand der weiteren Unteransprüche und der nachfolgenden Beschreibung unter Bezugnahme auf die Figuren.

Ein Aspekt der vorliegenden Erfindung bezieht sich auf ein computerimplementiertes Verfahren zum Berechnen von bauphysikalischen Kennwerten, insbesondere von Wärmestromkennwerten, einer konfigurierbaren Bauteilanordnung in einem Bauobjekt. Das Verfahren umfasst ein Auswählen zumindest einen Bauteils und einer Einbauumgebung des zumindest einen Bauteils durch einen Benutzer mittels einer Software-implementierten Benutzeroberfläche.

Das Verfahren umfasst des Weiteren ein Erstellen einer Geometrie eines Zusammenbaus des zumindest einen Bauteils und der Einbauumgebung des zumindest einen Bauteils mittels eines Geometriebearbeitungsmoduls. Darüber hinaus umfasst das Verfahren ein Berechnen der bauphysikalischen Kennwerte, insbesondere der Wärmestromkennwerte, des Zusammenbaus des zumindest einen Bauteils und der Einbauumgebung des zumindest einen Bauteils unter Verwendung von individuellen bauphysikalischen Kennwerten des zumindest einen Bauteils und individuellen bauphysikalischen Kennwerten der Einbauumgebung des zumindest einen Bauteils mittels eines Berechnungsmoduls.

Ein weiterer Aspekt der vorliegenden Erfindung bezieht sich auf ein System zum Berechnen von bauphysikalischen Kennwerten, insbesondere von Energiekennwerten, einer konfigurierbaren Bauteilanordnung in einem Bauobjekt. Das System umfasst eine Software-implementierte Benutzeroberfläche, welche dazu eingerichtet ist, dass das zumindest einen Bauteil und eine Einbauumgebung des zumindest eines Bauteils durch einen Benutzer auswählbar ist.

Das System umfasst des Weiteren ein Geometriebearbeitungsmodul, welches dazu eingerichtet ist, eine Geometrie eines Zusammenbaus des zumindest eines Bauteils und der Einbauumgebung des zumindest eines Bauteils zu erstellen.

Das System umfasst darüber hinaus ein Berechnungsmodul, welches dazu eingerichtet ist, bauphysikalische Kennwerte, insbesondere Energiekennwerte, des Zusammenbaus des zumindest einen Bauteils und der Einbauumgebung des zumindest einen Bauteils unter Verwendung von individuellen bauphysikalischen Kennwerten des zumindest einen Bauteils und individuellen bauphysikalischen Kennwerten der Einbauumgebung des zumindest einen Bauteils zu berechnen.

Eine Idee der vorliegenden Erfindung ist es, durch Bereitstellen der Software-implementierten Benutzeroberfläche, die es dem Benutzer ermöglicht, zumindest ein Bauteil und eine Einbauumgebung des zumindest einen Bauteils auszuwählen, das Bauteil in die jeweilige Einbauumgebung einzufügen, d.h. eine spezifische Geometrie des Zusammenbaus zu erstellen und anschließend die gewünschten bauphysikalischen Kennwerte, insbesondere die Wärmestromkennwerte, des Zusammenbaus des zumindest einen Bauteils und der Einbauumgebung zu berechnen.

Bekannt sind hierbei die individuellen Wärmestromkennwerte des zumindest einen Bauteils und der Einbauumgebung. Das Verfahren ermöglicht dabei in vorteilhafter Weise die Erstellung der Geometrie des Zusammenbaus und die Berechnung der bauphysikalischen Kennwerte des Zusammenbaus unter Verwendung der bekannten Einzelwerte der Wärmestromkennwerte des zumindest einen Bauteils und der Einbauumgebung für sich.

Der Benutzer hat somit die Möglichkeit, durch Spezifizierung bzw. Konfigurierung einer gewünschten Bauteilanordnung in einem Bauobjekt in wenigen Eingabeschritten automatisch alle relevanten bauphysikalischen Kennwerte, insbesondere Wärmestromkennwerte, berechnen zu lassen. Dies bietet gegenüber den bekannten Lösungen eine sehr zeitsparende und kosteneffiziente Lösung und bietet daher einen deutlichen Mehrwert bei der Berechnung der bauphysikalischen Kennwerte gegenüber existierenden Lösungen.

Gemäß einer bevorzugten Weiterbildung ist vorgesehen, dass nach dem Auswählen des zumindest einen Bauteils und der Einbauumgebung des zumindest einen Bauteils durch den Benutzer mittels der Software-implementierten Benutzeroberfläche Geometriedaten des zumindest einen Bauteils und der Einbauumgebung des zumindest einen Bauteils von einem Datenspeicher an das Geometriebearbeitungsmodul übertragen werden. Das Geometriebearbeitungsmodul kann somit in vorteilhafter Weise auf die bereits gespeicherten Daten des bzw. der ausgewählten Bauteile und der Einbauumgebung zurückgreifen.

Gemäß einer weiteren bevorzugten Weiterbildung ist vorgesehen, dass Anschlusskoordinaten des zumindest einen Bauteils in dem Datenspeicher als Anschlusskoordinatendaten gespeichert sind, wobei das zumindest eine Bauteil unter Verwendung der Anschlusskoordinaten durch das Geometriebearbeitungsmodul zu der Einbauumgebung ausgerichtet wird. Somit kann in vorteilhafter Weise eine korrekte Ausrichtung bzw. Positionierung der Bauteile zueinander gewährleistet werden.

Gemäß einer weiteren bevorzugten Weiterbildung ist vorgesehen, dass durch den Benutzer mittels der Software-implementierten Benutzeroberfläche Geometrieparameter der Einbauumgebung des zumindest einen Bauteils, insbesondere eines Mauerwerks, einer Außendämmung und/oder einer Decke, ausgewählt und an das Geometriebearbeitungsmodul übermittelt werden. Das Geometriebearbeitungsmodul ist somit in der Lage, die ausgewählte Geometrie entsprechend der getroffenen Auswahl zusammenzufügen.

Gemäß einer weiteren bevorzugten Weiterbildung ist vorgesehen, dass der Zusammenbau des zumindest einen Bauteils und der Einbauumgebung des zumindest einen Bauteils mittels der Software-implementierten Benutzeroberfläche graphisch dargestellt wird. Der Benutzer kann somit in vorteilhafter Weise seine getroffene Auswahl nachvollziehen, indem ihm diese automatisch in der korrekten Konfiguration angezeigt wird.

Gemäß einer weiteren bevorzugten Weiterbildung ist vorgesehen, dass Geometriedaten des Zusammenbaus des zumindest einen Bauteils und der Einbauumgebung des zumindest einen Bauteils durch das Geometriebearbeitungsmodul in dem Datenspeicher abgespeichert werden. Der durch den Benutzer konfigurierte Zusammenbau des Bauteils und der Einbauumgebung kann somit in vorteilhafter Weise in dem Datenspeicher abgespeichert werden. Die abgespeicherten Daten stehen somit für weitere Bearbeitungsschritte bzw. einer ggf. späteren Fortsetzung der Konfiguration zur Verfügung.

Gemäß einer weiteren bevorzugten Weiterbildung ist vorgesehen, dass das Berechnungsmodul Schwerpunkte von Flächen des zumindest einen Bauteils berechnet und Koordinaten der berechneten Schwerpunkte als Schwerpunktkoordinatendaten und Koordinaten von äußeren Kanten des zumindest einen Bauteils in dem Datenspeicher abspeichert. Diese in dem Datenspeicher abgespeicherten Parameter stehen somit in vorteilhafter Weise für nachfolgende Berechnungen zur Verfügung.

Gemäß einer weiteren bevorzugten Weiterbildung ist vorgesehen, dass Randbedingungen des zumindest einen Bauteils und einer Einbauumgebung des zumindest einen Bauteils unter Verwendung der Koordinaten der äußeren Kanten des zumindest einen Bauteils auswählbar sind, wobei die Randbedingungen Abmessungen der Einbauumgebung, insbesondere benachbart angeordneter weiterer Bauteile wie eine Höhe einer Betondecke, eine Höhe einer Wärmedämmung, eine Höhe einer Trittschalldämmung, eine Höhe eines Estrichs, eine Breite eines Außenputzes, eine Breite eines Innenputzes, eine Breite eines Mauerwerks und/oder eine Breite einer Außendämmung, umfassen.

Der Benutzer ist somit in vorteilhafter Weise in der Lage, eine Vielzahl von Parametern auszuwählen bzw. zu spezifizieren und so seine individuelle Konfiguration zu gestalten.

Gemäß einer weiteren bevorzugten Weiterbildung ist vorgesehen, dass eine Fläche einer Außenkontur des Zusammenbaus des zumindest einen Bauteils und der Einbauumgebung des zumindest einen Bauteils zum Erzeugen von Hohlräumen des Zusammenbaus des zumindest einen Bauteils und der Einbauumgebung des zumindest einen Bauteils durch das Berechnungsmodul berechnet wird. Vorstehend genannte Parameter ermöglichen somit in vorteilhafter Weise das Erzeugen von Hohlräumen des Zusammenbaus, was wiederum in die spätere Berechnung der Wärmestromwerte einfließt.

Gemäß einer weiteren bevorzugten Weiterbildung ist vorgesehen, dass das zumindest eine Bauteil an einem Ursprungskoordinatensystem ausgerichtet ist, und wobei eine Geometrie des Zusammenbaus des zumindest einen Bauteils und der Einbauumgebung des zumindest einen Bauteils mittels des Geometriebearbeitungsmoduls unter Verwendung von Bibliotheken und der mittels der Software-implementierten Benutzeroberfläche ausgewählten Geometrieparametern berechnet wird.

Das Geometriebearbeitungsmodul kann somit in vorteilhafter Weise auf die dedizierte Software-Bibliotheken zur Durchführung bestimmter Berechnungsaufgaben zurückgreifen.

Gemäß einer weiteren bevorzugten Weiterbildung ist vorgesehen, dass die in dem Datenspeicher abgespeicherten Geometriedaten des Zusammenbaus des zumindest einen Bauteils und der Einbauumgebung des zumindest einen Bauteils durch ein Vernetzungsmodul vernetzt werden.

Somit werden in vorteilhafter Weise die Daten bzw. ein Datensatz betreffend die geometrischen Daten des Zusammenbaus des zumindest einen Bauteils und der Einbauumgebung des zumindest einen Bauteils erstellt.

Gemäß einer weiteren bevorzugten Weiterbildung ist vorgesehen, dass ein Temperaturfeld des zumindest einen Bauteils und der Einbauumgebung des zumindest einen Bauteils mit dem Berechnungsmodul unter Verwendung von Lambdawerten und Randbedingungen des zumindest einen Bauteils und der Einbauumgebung des zumindest einen Bauteils numerisch berechnet werden, und wobei Temperaturfeld- und Isothermenbilder mit einem Nachverarbeitungsmodul erstellt werden.

Somit kann in vorteilhafter Weise das Temperaturfeld des zumindest einen Bauteils und der Einbauumgebung des zumindest einen Bauteils berechnet und graphisch dargestellt werden.

Gemäß einer weiteren bevorzugten Weiterbildung ist vorgesehen, dass der Wärmestrom und/oder eine minimale Temperatur an einer Bauteilinnenseite des zumindest einen Bauteils und der Einbauumgebung des zumindest einen Bauteils unter Verwendung des Temperaturfelds mit dem Berechnungsmodul berechnet werden. Zusätzlich kann eine minimale Temperatur auf einer Bauteilinnenseite beispielsweise graphisch angezeigt werden.

Aufgrund der vorhergehenden Berechnungen, welche sich aus dem Zusammenbau bzw. der bauphysikalischen Eigenschaften der gewählten Bauteile ergibt, kann somit in vorteilhafter Weise der Wärmestrom und/oder die minimale Temperatur an der Wandinnenseite des zumindest einen Bauteils und der Einbauumgebung des zumindest einen Bauteils berechnet werden.

Gemäß einer weiteren bevorzugten Weiterbildung ist vorgesehen, dass die berechneten bauphysikalischen Kennwerte, insbesondere Wärmestromkennwerte, auf der Software-implementierten Benutzeroberfläche angezeigt werden, und wobei ein Bericht der Wärmestromkennwerte, des Temperaturfelds und von Isothermen in einem vorgegebenen Dateiformat erstellt wird.

Der Benutzer erhält somit eine Darstellung des Berechnungsergebnisses in numerischer Form als auch in graphischer Form und erhält zudem einen automatisch erstellten Bericht, aus welchem diese Werte hervorgehen.

### Kurze Beschreibung der Zeichnungen

Zum besseren Verständnis der vorliegenden Erfindung und ihrer Vorteile wird nun auf die nachfolgende Beschreibung in Verbindung mit den dazugehörigen Zeichnungen verwiesen. Nachfolgend wird die Erfindung anhand exemplarischer Ausführungsformen näher erläutert, die in den schematischen Abbildungen der Zeichnungen angegeben sind.

Es zeigen:
- Fig. 1: eine schematische Darstellung eines Auswahlschrittes des Verfahrens zum Berechnen von bauphysikalischen Kennwerten auf der Software-implementierten Benutzeroberfläche gemäß einer bevorzugten Ausführungsform der Erfindung;
- Fig. 2: eine schematische Darstellung eines Zusammenbaus des zumindest einen Bauteils auf der Software-implementierten Benutzeroberfläche gemäß der bevorzugten Ausführungsform der Erfindung;
- Fig. 3: eine Querschnittsansicht des Zusammenbaus des zumindest einen Bauteils und der Einbauumgebung des zumindest einen Bauteils gemäß der bevorzugten Ausführungsform der Erfindung;
- Fig. 4: ein Ablaufdiagramm eines Verfahrens zum Berechnen von bauphysikalischen Kennwerten gemäß der bevorzugten Ausführungsform der Erfindung; und
- Fig. 5: ein Systemdiagramm eines Systems zum Berechnen von bauphysikalischen Kennwerten gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

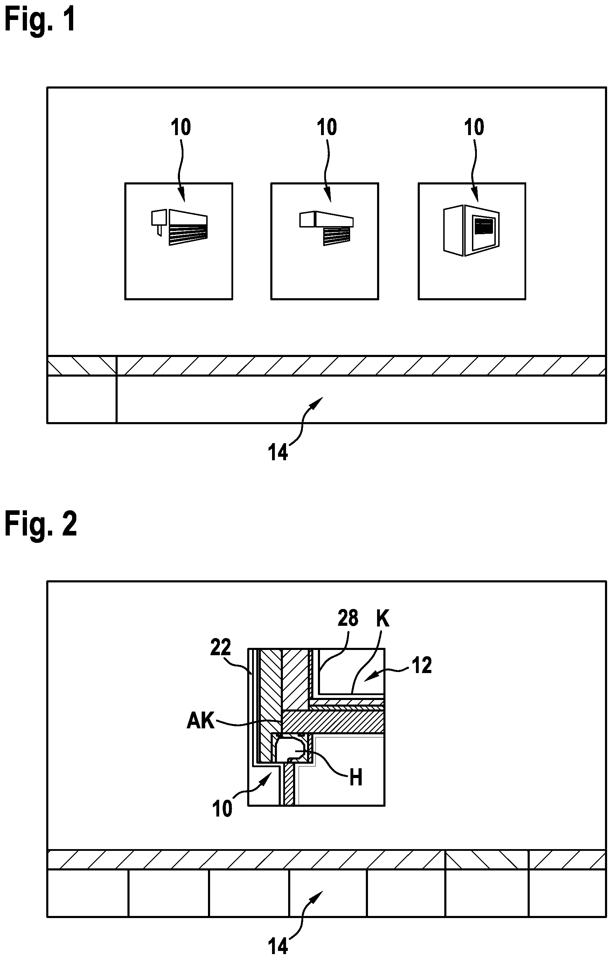

Fig. 1 zeigt eine schematische Darstellung eines Auswahlschrittes des Verfahrens zum Berechnen von bauphysikalischen Kennwerten auf der Software-implementierten Benutzeroberfläche gemäß einer bevorzugten Ausführungsform der Erfindung.

In einem ersten Schritt hat der Benutzer die Möglichkeit, aus einer Mehrzahl von Produkten bzw. Bauteilen 10 ein gewünschtes Bauteil 10 auszuwählen. Im vorliegenden Ausführungsbeispiel handelt es sich bei dem Bauteil 10 um einen Rollladenkasten.

Alternativ ist ein jegliches anderes Produkt, wie beispielsweise Fenster, eine Tür, eine Attika, ein Kniestock, eine Bodenplatte etc., denkbar. Die graphische Benutzeroberfläche 14 ermöglicht dem Benutzer ein schnelles und einfaches Selektieren des gewünschten Bauteils 10 und eine intuitive Bedienführung.

Fig. 2 zeigt eine schematische Darstellung eines Zusammenbaus des zumindest einen Bauteils auf der Software-implementierten Benutzeroberfläche gemäß der bevorzugten Ausführungsform der Erfindung.

In der vorliegenden Darstellung ist das ausgewählte Bauteil 10, im vorliegenden Ausführungsbeispiel ein Rollladenkasten, in die Einbauumgebung 12, im vorliegenden Ausführungsbeispiel eine Außenwand und eine Geschossdecke, integriert bzw. daran befestigt.

Das Bauteil 10 ist in der vorliegenden Zeichnung zweidimensional dargestellt. Alternativ kann das Bauteil beispielsweise dreidimensional berechnet und dargestellt werden. Somit ist eine noch genauere Berechnung sowie graphische Darstellung der Wärmestromkennwerte möglich.

Der Zusammenbau des Bauteils 10 und der Einbauumgebung 12 des zumindest einen Bauteils 10 ist auf der Software-implementierten Benutzeroberfläche 14 graphisch dargestellt.

Eine Fläche einer Außenkontur 22 des Zusammenbaus des Bauteils 10 und der Einbauumgebung 12 des Bauteils 10 wird zum Erzeugen von Hohlräumen H des Zusammenbaus des Bauteils 10 und der Einbauumgebung 12 des zumindest einen Bauteils 10 durch ein (in Fig. 2 nicht dargestelltes) Berechnungsmodul berechnet.

In der vorliegenden Ausführungsform ist lediglich ein Bauteil 10 in die Einbauumgebung 12 integriert. Alternativ kann selbstverständlich eine Mehrzahl von Bauteilen dargestellt, zusammengebaut und in die Einbauumgebung integriert werden.

Dies entspricht dem Regelfall. Der Wärmestrom und eine minimale Temperatur an einer Bauteilinnenseite 28 des Bauteils 10 und der Einbauumgebung 12 des Bauteils 10 werden sodann unter Verwendung des Temperaturfelds mit dem (in Fig. 2 nicht dargestellten) Berechnungsmodul berechnet.

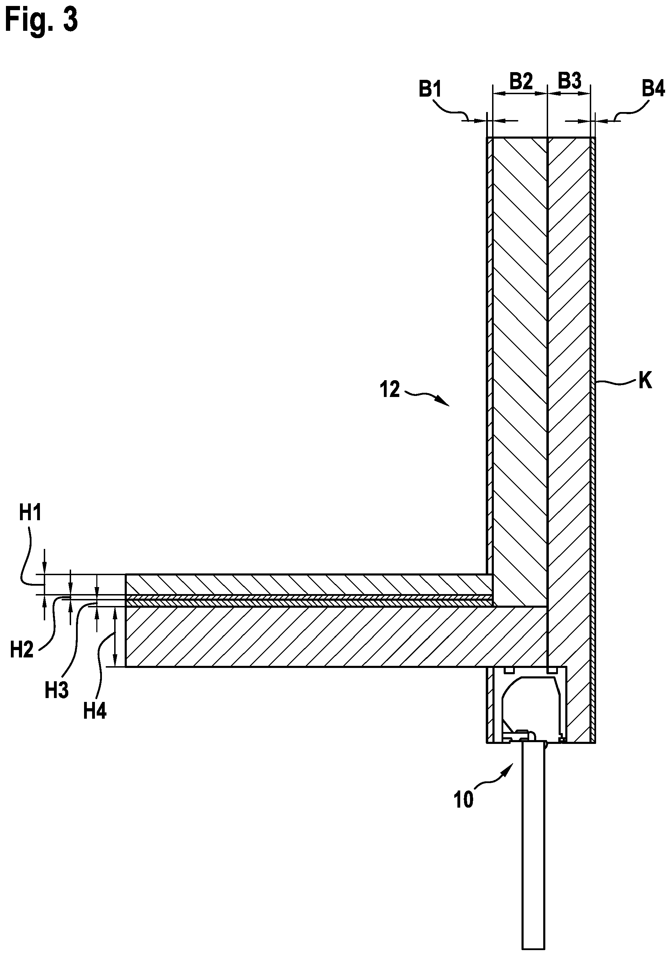

Fig. 3 zeigt eine Querschnittsansicht des Zusammenbaus des zumindest einen Bauteils und der Einbauumgebung des zumindest einen Bauteils gemäß der bevorzugten Ausführungsform der Erfindung.

Auf der (in Fig. 3 nicht dargestellten) Software-implementierten Benutzeroberfläche sind zudem in einem nachfolgenden Schritt Randbedingungen des Bauteils 10 und der Einbauumgebung 12 des zumindest einen Bauteils 10 unter Verwendung der Koordinaten der äußeren Kanten K des Bauteils 10 auswählbar bzw. frei konfigurierbar.

Die Randbedingungen umfassen beispielsweise eine Höhe H4 einer Betondecke, eine Höhe H3 einer Wärmedämmung, eine Höhe einer (in Fig. 3 nicht gezeigten) Trittschalldämmung, eine Höhe H1 eines Estrichs, eine Breite B4 eines Außenputzes, eine Breite B1 eines Innenputzes, eine Breite B2 eines Mauerwerks und/oder eine Breite B3 einer Außendämmung.

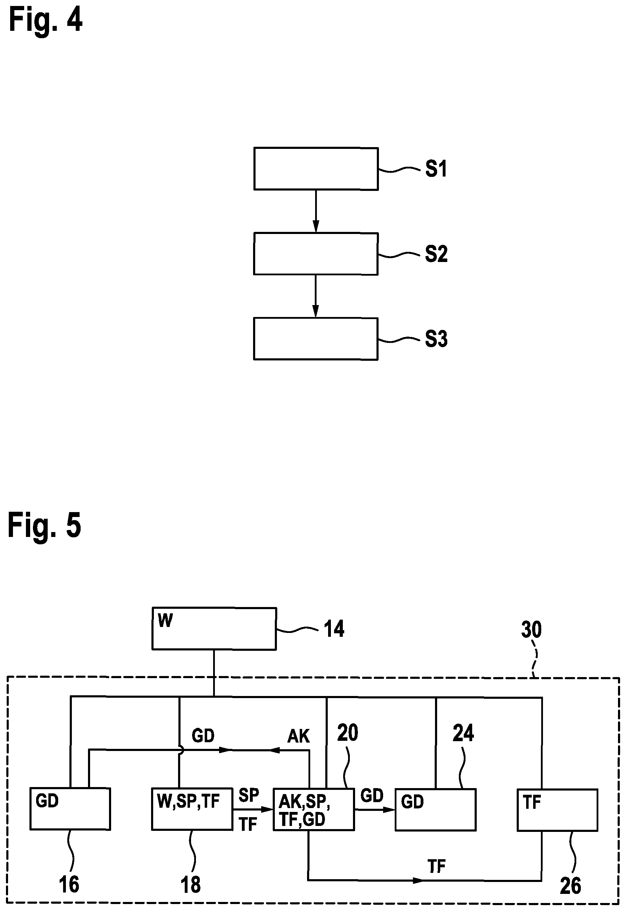

Fig. 4 zeigt ein Ablaufdiagramm eines Verfahrens zum Berechnen von bauphysikalischen Kennwerten gemäß der bevorzugten Ausführungsform der Erfindung.

Das computerimplementierte Verfahren zum Berechnen von bauphysikalischen Kennwerten, insbesondere von Wärmestromkennwerten W, einer konfigurierbaren Bauteilanordnung in einem Bauobjekt umfasst ein Auswählen S1 zumindest eines Bauteils 10 und einer Einbauumgebung 12 des zumindest einen Bauteils 10 durch einen Benutzer mittels einer Software-implementierten Benutzeroberfläche 14.

Das Verfahren umfasst überdies ein Erstellen S2 einer Geometrie eines Zusammenbaus des zumindest einen Bauteils 10 und der Einbauumgebung 12 des zumindest einen Bauteils 10 mittels eines Geometriebearbeitungsmoduls 16.

Darüber hinaus umfasst das Verfahren ein Berechnen S3 der bauphysikalischen Kennwerte, insbesondere der Wärmestromkennwerte W, des Zusammenbaus des zumindest einen Bauteils 10 und der Einbauumgebung 12 des zumindest einen Bauteils 10 unter Verwendung von individuellen bauphysikalischen Kennwerten des zumindest einen Bauteils 10 und individuellen bauphysikalischen Kennwerten der Einbauumgebung 12 des zumindest einen Bauteils 10 mittels eines Berechnungsmoduls 18.

Fig. 5 zeigt ein Systemdiagramm eines Systems zum Berechnen von bauphysikalischen Kennwerten gemäß der bevorzugten Ausführungsform der Erfindung.

Nach dem Auswählen des zumindest einen Bauteils und der Einbauumgebung des zumindest einen Bauteils durch den Benutzer mittels der Software-implementierten Benutzeroberfläche 14 werden Geometriedaten GD des zumindest einen Bauteils und der Einbauumgebung des zumindest einen Bauteils von einem Datenspeicher 20 an das Geometriebearbeitungsmodul 16 übertragen.

Ferner sind Anschlusskoordinaten AK des zumindest einen Bauteils in dem Datenspeicher 20 als Anschlusskoordinatendaten gespeichert. Das zumindest eine Bauteil wird sodann unter Verwendung der Anschlusskoordinaten AK durch das Geometriebearbeitungsmodul 16 zu der Einbauumgebung ausgerichtet.

Sodann werden durch den Benutzer mittels der Software-implementierten Benutzeroberfläche 14 Geometrieparameter der Einbauumgebung des zumindest einen Bauteils, insbesondere eines Mauerwerks, einer Außendämmung und/oder einer Decke, ausgewählt und an das Geometriebearbeitungsmodul 16 übermittelt. Ferner werden Geometriedaten des Zusammenbaus des zumindest einen Bauteils und der Einbauumgebung des zumindest einen Bauteils durch das Geometriebearbeitungsmodul 16 in dem Datenspeicher 20 abgespeichert.

Das Berechnungsmodul 18 berechnet sodann Schwerpunkte SP von Flächen des zumindest einen Bauteils und Koordinaten der berechneten Schwerpunkte SP werden als Schwerpunktkoordinatendaten und Koordinaten von äußeren Kanten des zumindest einen Bauteils in dem Datenspeicher abgespeichert.

Das zumindest eine Bauteil ist an einem Ursprungskoordinatensystem ausgerichtet. Eine Geometrie des Zusammenbaus des zumindest einen Bauteils und der Einbauumgebung des zumindest einen Bauteils wird mittels des Geometriebearbeitungsmoduls 16 unter Verwendung von Software-basierten Bibliotheken und der mittels der Software-implementierten Benutzeroberfläche 14 ausgewählten Geometrieparametern berechnet.

Die in dem Datenspeicher 20 abgespeicherten Geometriedaten GD des Zusammenbaus des zumindest einen Bauteils und der Einbauumgebung des zumindest einen Bauteils werden sodann durch ein Vernetzungsmodul 24 vernetzt.

Ein Temperaturfeld TF des zumindest einen Bauteils und der Einbauumgebung des zumindest einen Bauteils werden mit dem Berechnungsmodul 18 unter Verwendung von Lambdawerten und Randbedingungen des zumindest einen Bauteils und der Einbauumgebung des zumindest einen Bauteils numerisch berechnet. Temperaturfeld- und Isothermenbilder werden sodann mit einem Nachbearbeitungsmodul 26 erstellt.

Die berechneten bauphysikalischen Kennwerte, insbesondere Wärmestromkennwerte W, werden sodann auf der Software-implementierten Benutzeroberfläche 14 angezeigt. Darüber hinaus wird ein Bericht der Wärmestromkennwerte W, des Temperaturfelds TF und von Isothermen in einem vorgegebenen Dateiformat erstellt.

Das vorstehend genannte System ist als Client-Server-System implementiert, wobei die Software-implementierte Benutzeroberfläche 14 als Client und die Module 16, 18, 24, 26 sowie der Datenspeicher 20 auf einem Server 30 betrieben werden. Alternativ kann eine andere geeignete Architektur des Systems vorgesehen werden, wie beispielsweise ein dezentrales System oder ein Cloud-basiertes System.

Die in dem Datenspeicher gespeicherten Dateien weisen vorzugsweise ein IGES-Format auf. Hierbei handelt es sich um ein universelles CAD-Format. Die Geometriedateien werden daher bevorzugt in dem IGES-Format abgespeichert.

Der wesentliche Vorteil der vorliegenden Lösung besteht daher in der Erstellung der Geometrie des Zusammenbaus der gewählten Produkte bzw. Bauteile und der Einbauumgebung unter Verwendung der Geometrieparameter in einer dynamischen parametrischen Konstruktion, d.h., der Benutzer hat über die Software-implementierte Benutzeroberfläche die Möglichkeit, die betreffenden Parameter dynamisch auszuwählen bzw. einzugeben.

Dieses Dynamisieren der Parameter ermöglicht in vorteilhafter Weise die individuelle Konstruktion bzw. den individuellen Zusammenbau der gewählten Bauteile und die individuelle Berechnung der bauphysikalischen Kennwerte, insbesondere der Wärmestromkennwerte, des Zusammenbaus der gewählten Bauteile in der Einbauumgebung.

### Bezugszeichenliste

- 10: Bauteil
- 12: Einbauumgebung
- 14: Benutzeroberfläche
- 16: Geometriebearbeitungsmodul
- 18: Berechnungsmodul
- 20: Datenspeicher
- 22: Außenkontur
- 24: Vernetzungsmodul
- 26: Nachbearbeitungsmodul
- 28: Bauteilinnenseite
- 30: Server
- AK: Anschlusskoordinaten
- B1: Breite eines Innenputzes
- B2: Breite eines Mauerwerks
- B3: Breite einer Außendämmung
- B4: Breite eines Außenputzes
- GD: Geometriedaten
- H: Hohlräume
- H1: Höhe eines Estrichs
- H2: Höhe einer Trittschalldämmung
- H3: Höhe einer Wärmedämmung
- H4: Höhe einer Betondecke
- K: Kanten
- SP: Schwerpunkte
- TF: Temperaturfeld
- W: Wärmestromkennwerte

## Patentansprüche

1. Computerimplementiertes Verfahren zum Berechnen von bauphysikalischen Kennwerten,
insbesondere von Wärmestromkennwerten (W), einer konfigurierbaren Bauteilanordnung in einem Bauobjekt mit den Schritten:
Auswählen (S1) zumindest eines Bauteils (10) und einer Einbauumgebung (12) des zumindest einen Bauteils (10) durch einen Benutzer mittels einer Software-implementierten Benutzeroberfläche (14);
Erstellen (S2) einer Geometrie eines Zusammenbaus des zumindest einen Bauteils (10) und der Einbauumgebung (12) des zumindest einen Bauteils (10) mittels einem Geometriebearbeitungsmodul (16); und
Berechnen (S3) der bauphysikalischen Kennwerte, insbesondere der Wärmestromkennwerte (W), des Zusammenbaus des zumindest einen Bauteils (10) und der Einbauumgebung (12) des zumindest einen Bauteils (10) unter Verwendung von individuellen bauphysikalischen Kennwerten des zumindest einen Bauteils (10) und individuellen bauphysikalischen Kennwerten der Einbauumgebung (12) des zumindest einen Bauteils (10) mittels einem Berechnungsmodul (18).

2. Computerimplementiertes Verfahren nach Anspruch 1, **dadurch gekennzeichnet, dass** nach dem Auswählen (S1) des zumindest einen Bauteils (10) und der Einbauumgebung (12) des zumindest einen Bauteils (10) durch den Benutzer mittels der Software-implementierten Benutzeroberfläche (14) Geometriedaten (GD) des zumindest einen Bauteils (10) und der Einbauumgebung (12) des zumindest einen Bauteils (10) von einem Datenspeicher (20) an das Geometriebearbeitungsmodul (16) übertragen werden.

3. Computerimplementiertes Verfahren nach Anspruch 1 oder 2, **dadurch gekennzeichnet, dass** Anschlusskoordinaten (AK) des zumindest einen Bauteils (10) in dem Datenspeicher (20) als Anschlusskoordinatendaten gespeichert sind, wobei das zumindest eine Bauteil (10) unter Verwendung der Anschlusskoordinaten (AK) durch das Geometriebearbeitungsmodul (16) zu der Einbauumgebung (12) ausgerichtet wird.

4. Computerimplementiertes Verfahren nach einem der vorhergehenden Ansprüche, **dadurch gekennzeichnet, dass** durch den Benutzer mittels der Software-implementierten Benutzeroberfläche (14) Geometrieparameter der Einbauumgebung (12) des zumindest einen Bauteils (10), insbesondere eines Mauerwerks, einer Außendämmung und/oder einer Decke, ausgewählt und an das Geometriebearbeitungsmodul (16) übermittelt werden.

5. Computerimplementiertes Verfahren nach einem der vorhergehenden Ansprüche, **dadurch gekennzeichnet, dass** der Zusammenbau des zumindest einen Bauteils (10) und der Einbauumgebung (12) des zumindest einen Bauteils (10) mittels der Software-implementierten Benutzeroberfläche (14) graphisch dargestellt wird.

6. Computerimplementiertes Verfahren nach einem der Ansprüche 2 bis 5, **dadurch gekennzeichnet, dass** Geometriedaten (GD) des Zusammenbaus des zumindest einen Bauteils (10) und der Einbauumgebung (12) des zumindest einen Bauteils (10) durch das Geometriebearbeitungsmodul (16) in dem Datenspeicher (20) abgespeichert werden.

7. Computerimplementiertes Verfahren nach einem der Ansprüche 2 bis 6, **dadurch gekennzeichnet, dass** das Berechnungsmodul (18) Schwerpunkte (SP) von Flächen des zumindest einen Bauteils (10) berechnet und Koordinaten der berechneten Schwerpunkte (SP) als Schwerpunktkoordinatendaten und Koordinaten von äußeren Kanten (K) des zumindest einen Bauteils (10) in dem Datenspeicher (20) abspeichert.

8. Computerimplementiertes Verfahren nach Anspruch 7, **dadurch gekennzeichnet, dass** Randbedingungen des zumindest einen Bauteils (10) und einer Einbauumgebung (12) des zumindest einen Bauteils (10) unter Verwendung der Koordinaten der äußeren Kanten (K) des zumindest einen Bauteils (10) auswählbar sind, wobei die Randbedingungen Abmessungen der Einbauumgebung (12), insbesondere benachbart angeordneter weiterer Bauteile wie eine Höhe (H4) einer Betondecke, eine Höhe (H3) einer Wärmedämmung, eine Höhe einer Trittschalldämmung (H2), eine Höhe (H1) eines Estrichs, eine Breite (B4) eines Außenputzes, eine Breite (B1) eines Innenputzes, eine Breite (B2) eines Mauerwerks und/oder eine Breite (B3) einer Außendämmung, umfassen.

9. Computerimplementiertes Verfahren nach einem der vorhergehenden Ansprüche, **dadurch gekennzeichnet, dass** eine Fläche einer Außenkontur (22) des Zusammenbaus des zumindest einen Bauteils (10) und der Einbauumgebung (12) des zumindest einen Bauteils (10) zum Erzeugen von Hohlräumen (H) des Zusammenbaus des zumindest einen Bauteils (10) und der Einbauumgebung (12) des zumindest einen Bauteils (10) durch das Berechnungsmodul (18) berechnet wird.

10. Computerimplementiertes Verfahren nach einem der vorhergehenden Ansprüche, **dadurch gekennzeichnet, dass** das zumindest eine Bauteil (10) an einem Ursprungskoordinatensystem ausgerichtet ist, und wobei eine Geometrie des Zusammenbaus des zumindest einen Bauteils (10) und der Einbauumgebung (12) des zumindest einen Bauteils (10) mittels dem Geometriebearbeitungsmodul (16) unter Verwendung von Bibliotheken und der mittels der Software-implementierten Benutzeroberfläche (14) ausgewählten Geometrieparametern berechnet wird.

11. Computerimplementiertes Verfahren nach einem der Ansprüche 6 bis 10, **dadurch gekennzeichnet, dass** die in dem Datenspeicher (20) abgespeicherten Geometriedaten (GD) des Zusammenbaus des zumindest einen Bauteils (10) und der Einbauumgebung (12) des zumindest einen Bauteils (10) durch ein Vernetzungsmodul (24) vernetzt werden.

12. Computerimplementiertes Verfahren nach einem der Ansprüche 8 bis 11, **dadurch gekennzeichnet, dass** ein Temperaturfeld (TF) des zumindest einen Bauteils (10) und der Einbauumgebung (12) des zumindest einen Bauteils (10) mit dem Berechnungsmodul (18) unter Verwendung von Lambdawerten und Randbedingungen des zumindest einen Bauteils (10) und der Einbauumgebung (12) des zumindest einen Bauteils (10) numerisch berechnet werden, und wobei Temperaturfeld- und Isothermenbilder mit einem Nachverarbeitungsmodul (26) erstellt werden.

13. Computerimplementiertes Verfahren nach Anspruch 12, **dadurch gekennzeichnet, dass** der Wärmestrom und/oder eine minimale Temperatur an einer Bauteilinnenseite (28) des zumindest einen Bauteils (10) und der Einbauumgebung (12) des zumindest einen Bauteils (10) unter Verwendung des Temperaturfelds (TF) mit dem Berechnungsmodul (18) berechnet werden.

14. Computerimplementiertes Verfahren nach Anspruch 12, **dadurch gekennzeichnet, dass** die berechneten bauphysikalischen Kennwerte, insbesondere Wärmestromkennwerte (W), auf der Software-implementierten Benutzeroberfläche (14) angezeigt werden, und wobei ein Bericht der Wärmestromkennwerte (W), des Temperaturfelds (TF) und von Isothermen in einem vorgegebenen Dateiformat erstellt wird.

15. System zum Berechnen von bauphysikalischen Kennwerten, insbesondere von Energiekennwerten, einer konfigurierbaren Bauteilanordnung in einem Bauobjekt mit:
einer Software-implementierten Benutzeroberfläche (14), welche dazu eingerichtet ist, dass zumindest eine Bauteil (10) und eine Einbauumgebung (12) des zumindest einen Bauteils (10) durch einen Benutzer auswählbar ist;
einem Geometriebearbeitungsmodul (16), welches dazu eingerichtet ist, eine Geometrie eines Zusammenbaus des zumindest einen Bauteils (10) und der Einbauumgebung (12) des zumindest einen Bauteils (10) zu erstellen; und
einem Berechnungsmodul (18), welches dazu eingerichtet ist, bauphysikalische Kennwerte, insbesondere Energiekennwerte, des Zusammenbaus des zumindest einen Bauteils (10) und der Einbauumgebung (12) des zumindest einen Bauteils (10) unter Verwendung von individuellen bauphysikalischen Kennwerten des zumindest einen Bauteils (10) und individuellen bauphysikalischen Kennwerten der Einbauumgebung (12) des zumindest einen Bauteils (10) zu berechnen.
